# EUROPÄISCHE PATENTSCHRIFT

(11) **EP 4 045 440 B1**
(45) Veröffentlichungstag und Bekanntmachung des Hinweises auf die Patenterteilung: **12.06.2024**
(21) Anmeldenummer: 20785738.4
(22) Anmeldetag: 01.10.2020
(51) Int. Cl.: B65G 47/248, B65G 54/02

(54) **VORRICHTUNG UND VERFAHREN ZUM TRANSPORTIEREN VON GEGENSTÄNDEN**
DEVICE AND METHOD FOR TRANSPORTING OBJECTS
DISPOSITIF ET PROCÉDÉ DE TRANSPORT D'OBJETS

(30) Priorität: 17.10.2019 DE 102019127998
(43) Veröffentlichungstag der Anmeldung: 24.08.2022
(73) Patentinhaber: KRONES AG, 93073 Neutraubling (DE)
(72) Erfinder: WINZINGER, Frank, 93073 Neutraubling (DE); ROIDL, Wolfgang, 93073 Neutraubling (DE); NEUBAUER, Michael, 93073 Neutraubling (DE)
(74) Vertreter: v. Bezold & Partner Patentanwälte - PartG mbB
(86) Internationale Anmeldenummer: PCT/EP2020/077520
(87) Internationale Veröffentlichungsnummer: WO 2021/073886

(56) Entgegenhaltungen:
- WO-A1-2014/108287
- DE-A1-102013 212 377
- DE-A1-102014 102 116
- DE-A1-102014 104 905
- DE-A1-102016 109 435

## Beschreibung

### Technisches Gebiet

Die Erfindung betrifft eine Vorrichtung und ein Verfahren zum Transportieren von Gegenständen, vorzugsweise von Behältern für eine Behälterbehandlungsanlage.

### Technischer Hintergrund

In einer Behälterbehandlungsanlage können verschiedene Behälterbehandlungsvorrichtungen umfasst sein, die zum Behandeln der Behälter unterschiedliche Orientierungen der Behälter erfordern. Beispielsweise kann eine Rinsvorrichtung zum Rinsen bzw. Spülen von Behältern eine Orientierung über Kopf erfordern, während eine Füllvorrichtung zum Befüllen von Behältern eine aufrechte Orientierung der Behälter erfordern kann.

Aus dem Stand der Technik sind bereits einige Vorrichtungen bekannt, mit denen eine Orientierung eines Gegenstands beim Transportieren wie gewünscht verändert werden kann.

Die EP 1 123 886 B1 offenbart eine Vorrichtung zum Transportieren von Produkten längs einer Arbeitsstrecke. Die Vorrichtung weist eine als geschlossene Schleife ausgebildete Führung auf, auf welcher mehrere Förderelemente zur Aufnahme der Produkte beweglich geführt sind. An der Führung ist eine Vielzahl von hintereinander angeordneten, separat angesteuerten Spulen angeordnet, und jedes Förderelement weist mindestens einen Permanentmagneten auf, der in der Kombination mit den Spulen einen Linearmotor bildet. Jedes Förderelement umfasst einen auf der Führung verschiebbar geführten Wagen und ein auf dem Wagen beweglich gelagertes Transportelement für die Produkte. Die Bewegung des Transportelementes relativ zum Wagen ist durch Steuermittel gesteuert. Das Transportelement ist um eine vertikale, quer zur Transportrichtung des Wagens verlaufende Achse schwenkbar.

Die DE 10 2014 102 116 A1 offenbart eine Vorrichtung zum Spülen und Sterilisieren von Behältern in einer Getränkeabfüllanlage. In einem Ausführungsbeispiel werden Behälterhalterungen, die die Behälter an ihrem Halsabschnitt halten, über einen magnetischen tubularen Direktantrieb entlang eines Karussells geführt. Die Behälterhalterungen weisen einen als magnetischen Läufer ausgebildeten Abschnitt auf, welcher um einen Stator herum angeordnet ist. Durch eine entsprechende individuelle Bestromung jedes Läufers kann eine Verschwenkung der Behälterhalterung um den Stator herum erfolgen, um eine Orientierung des von der Behälterhalterung gehalten Behälters zu verändern.

Die WO 2014/108287 A1 offenbart eine Vorrichtung gemäß dem Oberbegriff des Anspruchs 1 und ein Tubenrohr-Transfersystem zum Fördern von Tubenrohren in einem Tubenherstellungsprozess von einer Tubenrohrherstellstation zu einer nachgeordneten Station. Das Tubenrohr-Transfersystem umfasst mehrere hintereinander entlang einer Führungsbahn verstellbare, jeweils Haltemittel zum Halten eines Tubenrohres aufweisende Transportelemente. Jedem Transportelement sind signalleitend mit Steuermitteln verbundene Antriebsmittel zugeordnet, die derart individuell von den Steuermitteln ansteuerbar sind, dass die Transportelemente mit voneinander unabhängigen, einstellbaren und veränderlichen Geschwindigkeiten entlang der Führungsbahn verstellbar sind. Die Antriebsmittel der Transportelemente sind von den Steuermitteln derart ansteuerbar, dass die Transportelemente seriell Tubenrohre von der Tubenrohrherstellstation aufnehmen, zu der entlang der Führungsbahn von der Tubenrohrherstellstation beabstandeten nachgeordneten Station überführen und dort oder vor Erreichen der Station gruppiert werden, um zeitgleich eine Anzahl von Tubenrohren von mehreren Transportelementen an die nachgeordnete Station übergeben zu können.

Weiterer Stand der Technik zum technologischen Hintergrund ist beispielsweise in der DE 600 22 518 T2 und der DE 10 2017 201 310 A1 offenbart.

Der Erfindung liegt die Aufgabe zu Grunde, eine alternative und/oder verbesserte Technik zum Verschwenken von Gegenständen, insbesondere Behältern, zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung schafft eine Vorrichtung gemäß Anspruch 1 zum Transportieren von Gegenständen, vorzugsweise von Behältern (z. B. Flaschen, insbesondere PET-Flaschen oder Glasflaschen, Dosen und/oder andere Behälter) für eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Vorrichtung weist eine (z. B. geschlossene bzw. umlaufende) Führungsbahn (z. B. Führungsschiene, Führungsnut oder Führungsrollbahn) auf. Die Vorrichtung weist mindestens eine Bewegungsvorrichtung, vorzugsweise mehrere Bewegungsvorrichtungen, auf. Die mindestens eine Bewegungsvorrichtung weist einen Grundkörper auf. Der Grundkörper ist (z. B. in einer Transportrichtung) entlang der Führungsbahn geführt und individuell (z. B. unabhängig von anderen Bewegungsvorrichtungen) antreibbar (fortbewegbar). Die mindestens eine Bewegungsvorrichtung weist eine Halterung zum Halten eines Gegenstands (z. B. eines Produkts), vorzugsweise eines Behälters (z. B. Behälterhalshalterung (z. B. vorgespannte Klammer, Dorn, Greifer usw.)) auf. Die Halterung ist um eine Schwenkachse schwenkbar mit dem Grundkörper verbunden. Die Schwenkachse ist angewinkelt (z. B. windschief und/oder in einem Winkel in einem Bereich zwischen 1° und 90°) zu einer Hochachse (z. B. Mittelhochachse oder parallel dazu) der mindestens einen Bewegungsvorrichtung orientiert. Die Vorrichtung weist eine Schwenkeinrichtung auf. Die Schwenkeinrichtung ist separat zu der mindestens einen Bewegungsvorrichtung angeordnet und zum Bewirken eines Verschwenkens der Halterung um die Schwenkachse ausgebildet.

Die Vorrichtung ermöglicht, dass mit nur einer Bewegungsvorrichtung unterschiedliche Behandlungsvorrichtungen mit unterschiedlichen Anforderungen an eine Orientierung des Gegenstands durchlaufen werden können, ohne dass zwischenzeitlich eine Übergabe des Gegenstands von der Bewegungsvorrichtung erforderlich wäre. Der so ermöglichte Schwenkvorgang kann somit die Durchführung von bestimmten Prozessschritten am Gegenstand erleichtern, ohne den Gegenstand von der Bewegungsvorrichtung abgeben zu müssen. Dies kann z. B. ein Rinsvorgang sein, bei dem ein Behälter über Kopf stehen sollte, damit das Rinsmedium auslaufen kann. Alternativ ist beispielsweise auch ein Wenden eines Behälters zum Vermischen von nacheinander eingefüllten Komponenten denkbar. Ein ein- oder mehrmaliges Schwenken vermischt die Zutaten im Behälter.

Vorzugsweise kann die Hochachse vertikal ausgerichtet sein bzw. eine Vertikalachse sein. Es ist möglich, dass eine Verlängerung der Hochachse bei vertikaler Ausrichtung der Bewegungsvorrichtung den Erdmittelpunkt schneidet.

In einem Ausführungsbeispiel ist die Schwenkachse so orientiert, dass der in der Halterung gehaltene Gegenstand über Kopf verschwenkbar ist. Damit kann beispielsweise ein Rinsvorgang zum Rinsen des Behälters oder ein Blasvorgang zum Herstellen des Behälters erleichtert werden oder ein Mischvorgang von Zutaten im Behälter verbessert werden.

Vorzugsweise kann ein Rinsen beispielsweise ein Reinigen mit einer Reinigungsflüssigkeit oder ein Spülen mit vorzugsweise sterilisiertem Wasser aufweisen.

In einem weiteren Ausführungsbeispiel ist die Schwenkachse dazu ausgebildet, die Halterung in einem Schwenkwinkel im Bereich zwischen 1° und 360° zu verschwenken, vorzugsweise um 180°. Damit kann beispielsweise eine aufrechte Stellung und eine Überkopf-Stellung des Behälters erreicht werden.

Zweckmäßig kann der hierin verwendete Ausdruck "über Kopf" oder "Überkopf-Stellung" sich auf eine Orientierung des Gegenstands beziehen, bei der ein oberer Teil (Kopfteil) des Gegenstands nach unten gerichtet ist. Die Hochachse des Gegenstands kann dabei beispielsweise parallel oder angewinkelt zu einer Vertikalachse verlaufen. Es ist möglich, dass bei einer "Überkopf-Stellung" bei Vorhandensein einer (z. B. Ausguss-) Öffnung (z. B. bei Getränkebehältern wie Flaschen) diese im Wesentlichen unten angeordnet ist (relativ zum Rest des Behälters) bzw. nach unten gerichtet ist.

In einem weiteren Ausführungsbeispiel ist die Halterung zwischen einer Grundstellung und einer Ausschwenkstellung, vorzugsweise Überkopf-Ausschwenkstellung, um die Schwenkachse verschwenkbar. Die Grundstellung und die Ausschwenkstellung können stabile Stellungen sein, in der die Halterung ohne weitere Beeinflussung von außen gehalten werden kann. Es ist möglich, dass die Halterung lediglich zwischen der Grundstellung und der Ausschwenkstellung verschwenkbar ist.

In einer Ausführungsform ist die Schwenkeinrichtung ortsfest bezüglich der Führungsbahn. Beispielsweise kann die Schwenkeinrichtung an der Führungsbahn befestigt sein, oder die Schwenkeinrichtung und die Führungsbahn sind an einem gemeinsamen Gestell befestigt.

In einer weiteren Ausführungsform ist die Schwenkeinrichtung dazu ausgebildet, die Halterung während eines Stillstands der jeweiligen Bewegungsvorrichtung oder während einer Bewegung der jeweiligen Bewegungsvorrichtung entlang der Führungsbahn zu verschwenken. So kann je nach Möglichkeit und Anforderung ein Verschwenken der Halterung und damit des Gegenstands erreicht werden.

Es ist möglich, dass die Vorrichtung eine Steuerung aufweist, die dazu ausgebildet ist, die Vorgänge eines Stehenbleibens bzw. Stillstands der Bewegungsvorrichtung und eines Schwenkens durch die Schwenkeinrichtung zu koordinieren. Beispielsweise kann die Steuerung eine elektronische Steuerung (z. B. mit Mikroprozessor und Speicher) und/oder eine mechanische Steuerung (z. B. über Kurven und/oder Hebel) und/oder eine pneumatische Steuerung aufweisen. Im Fall einer elektronischen Steuerung kann beispielsweise mindestens ein Sensor eine Position der Bewegungsvorrichtung sowie ein Stehenbleiben der Bewegungsvorrichtung erfassen und ein entsprechendes Signal an die Steuerung senden. Auf Basis dieses Signals kann die Steuerung im Anschluss die Schwenkeinrichtung bzw. einen Antrieb der Schwenkeinrichtung aktivieren.

In einer Weiterbildung kann der Sensor beispielsweise eine Spur eines Langstator-Linearantriebs verwenden, in welchem zur Positionserfassung Magnete vorhanden sind, welche mit anderen an der Bewegungsvorrichtung vorhandenen Magneten wechselwirken.

Zweckmäßig kann die Halterung derselben Bewegungsvorrichtung sowohl im Stillstand als auch während einer Bewegung entlang der Führungsbahn verschwenkt werden, je nach Ausführung der Schwenkeinrichtung. Damit kann flexibel mit unterschiedlichen Anforderungen hinsichtlich der Schwenkeinrichtung innerhalb einer Anlage oder in verschiedenen Anlagen umgegangen werden.

Gemäß der Erfindung weist die mindestens eine Bewegungsvorrichtung ein Verbindungselement auf. Das Verbindungselement ist mit der Schwenkeinrichtung (z. B. berührend oder berührungslos) verbindbar und mit der Halterung (z. B. physisch) verbunden (z. B. an der Halterung und/oder der Schwenkachse befestigt). Das Verbindungselement ist dazu ausgebildet, unter Einwirkung der Schwenkeinrichtung eine Schwenkbewegung der Halterung zu bewirken. Damit ermöglich das Verbindungselement eine selektive Kopplung mit der Schwenkeinrichtung, wenn dies gewünscht ist.

In einer Weiterbildung ist das Verbindungselement der mindestens einen Bewegungsvorrichtung um die Schwenkachse der Halterung verschwenkbar. Damit kann auf einfache Weise ein Verschwenken des Verbindungselements durch die Schwenkeinrichtung in ein Verschwenken der Halterung und damit des Gegenstands umgesetzt werden.

In einer weiteren Ausführungsform ist das Verbindungselement der mindestens einen Bewegungsvorrichtung als ein Führungselement, vorzugsweise eine drehbare Rolle, ein Gleitschuh, ein Führungsstift, eine Führungsplatte oder eine Führungsnut, ausgebildet. Damit kann das Verbindungselement auf einfache Weise mit einem entsprechend angepassten Verbindungselement (Gegenstück) der Schwenkeinrichtung in Eingriff gebracht werden, um den Schwenkvorgang zu starten.

Gemäß einer ersten Option der Erfindung ist ein Verbindungselement der Schwenkeinrichtung, das mit dem Verbindungselement der mindestens einen Bewegungsvorrichtung verbindbar ist (z. B. in Eingriff bringbar ist), vorzugsweise translatorisch und/oder quer zur Führungsbahn und/oder mittels eines Linearantriebs, bewegbar, um in Kontakt und außer Kontakt mit dem Verbindungselement der mindestens einen Bewegungsvorrichtung zu gelangen.

In einer weiteren Ausführungsvariante weist die Schwenkeinrichtung eine Kulissenführung auf, in der das Verbindungselement der mindestens einen Bewegungsvorrichtung führbar ist und deren Verlaufsform ein Verschwenken des Verbindungselements der mindestens einen Bewegungsvorrichtung, vorzugsweise um die Schwenkachse, bewirkt. Somit kann auf einfache Weise die Halterung und der gehaltene Gegenstand verschwenkt werden, während die Bewegungsvorrichtung sich entlang der Führungsbahn bewegt.

Es ist möglich, das der oben genannte Sensor beispielsweise an der Kulissenführung angeordnet ist.

Gemäß einer zweiten Option der Erfindung weist die Schwenkeinrichtung einen Drehantrieb auf, mit dem das Verbindungselement der mindestens einen Bewegungsvorrichtung drehbar ist, vorzugsweise um die Schwenkachse und/oder wenn eine Drehachse des Drehantriebs mit der Schwenkachse ausgerichtet ist (z. B. fluchtet). So kann auf einfache Weise die Halterung und der gehaltene Gegenstand verschwenkt werden, während die Bewegungsvorrichtung stillsteht.

In einer weiteren Ausführungsvariante sind die Schwenkeinrichtung und die Halterung auf der gleichen (z. B. Quer-)Seite bezüglich des Grundkörpers angeordnet. Alternativ können die Schwenkeinrichtung einerseits und die Halterung andererseits auf unterschiedlichen, vorzugsweise entgegengesetzten, (z. B. Quer-)Seiten bezüglich des Grundkörpers angeordnet sein. Dies ermöglicht beispielsweise, auf unterschiedliche bauliche Gegebenheiten und Anforderungen Rücksicht zu nehmen und die Schwenkeinrichtung entsprechend anzuordnen.

In einem Ausführungsbeispiel weist die Vorrichtung eine Stützvorrichtung auf, die zum Stützen des Gegenstands ausgebildet ist, vorzugsweise während des Verschwenkens um die Schwenkachse. Zweckmäßig ist die Stützvorrichtung separat von der Halterung ausgebildet. Dies ermöglicht, dass der Gegenstand beim Verschwenken sowohl von der Halterung der Bewegungsvorrichtung als auch von der Stützvorrichtung gehalten, gestützt und stabilisiert werden kann. So kann zudem die Belastung an der Halterung verringert werden.

In einer Weiterbildung weist die mindestens eine Bewegungsvorrichtung die Stützvorrichtung auf. Alternativ weist die Schwenkeinrichtung die Stützeinrichtung auf.

In einem Ausführungsbeispiel ist die Halterung eine Behälterhalshalterung (z. B. eine zweckmäßig vorgespannte Klammer), und die Stützvorrichtung ist eine Behälterrumpfstützeinrichtung und/oder eine Behälterbasisstützeinrichtung. Damit kann der Behälter während des Verschwenkens sicher am Rumpf bzw. der Basis abgestützt werden.

Insbesondere kann die Halterung eine Behälterhalshalterung für ein sogenanntes Neckhandling aufweisen.

In einem weiteren Ausführungsbeispiel ist die Stützvorrichtung, vorzugsweise translatorisch und/oder quer zur Führungsbahn und/oder mittels eines Linearantriebs, bewegbar, um in Kontakt und außer Kontakt mit dem von der Halterung gehaltenen Gegenstand zu gelangen. Damit wird ermöglicht, dass die Stützvorrichtung beispielsweise nur in Eingriff mit dem Gegenstand gelangt, wenn dies gewünscht ist, z. B. von kurz vor bis kurz nach einem Verschwenken der Halterung und des Gegenstands.

In einer Ausführungsform ist die Stützvorrichtung von der Schwenkeinrichtung schwenkbar, vorzugsweise um eine Drehachse der Schwenkeinrichtung und/oder die Schwenkachse. Damit kann der Gegenstand während des Verschwenkens besonders gut von der Stützvorrichtung abgestützt werden, da die Anlageflächen der Stützvorrichtung die gleichen Schwenkbewegungen vollführen wie der Gegenstand.

In einer weiteren Ausführungsform weist die mindestens eine Bewegungsvorrichtung eine Arretiervorrichtung auf. Beispielsweise kann die Arretiervorrichtung dazu ausgebildet sein, die Schwenkachse und/oder die Halterung (z. B. direkt oder indirekt) in einer Ausschwenkstellung und/oder in einer Grundstellung (z. B. Einschwenkstellung) zu arretieren, vorzugsweise mittels Magnetkraft, einer Rastvorrichtung oder eines elastisch vorgespannten Sperrkörpers. Damit kann ein ungewünschtes Abheben oder Verschwenken der Halterung z. B. beim Beschleunigen oder Verzögern der Bewegungsvorrichtung verhindert werden.

In einer Ausführungsvariante ist die mindestens eine Bewegungsvorrichtung mittels eines Langstator-Linearmotors oder eines Kurzstator-Linearmotors individuell antreibbar. Beispielsweise kann der Grundkörper einen oder mehrere (z. B. Elektro- oder Permanent-)Magnete aufweisen, die in magnetische Wechselwirkung mit einem oder mehreren (z. B. Elektro- oder Permanent-) Magneten, die parallel zu der Führungsbahn verlaufen können, treten können, um die mindestens eine Bewegungsvorrichtung fortzubewegen.

In einer weiteren Ausführungsvariante weist die Vorrichtung ferner eine weitere Schwenkeinrichtung auf, die separat von der mindestens einen Bewegungsvorrichtung angeordnet und zum Verschwenken der Halterung um die Schwenkachse ausgebildet ist. Die Schwenkeinrichtung kann zum Ausschwenken der Halterung eingerichtet sein, und die weitere Schwenkeinrichtung kann zum Einschwenken der ausgeschwenkten Halterung eingerichtet sein. Zwischen der Schwenkeinrichtung und der weiteren Schwenkeinrichtung kann beispielsweise eine Behandlungsvorrichtung (z. B. Rinsvorrichtung oder Behälterblasvorrichtung) angeordnet sein, die eine ausgeschwenkte Halterung mit entsprechend orientiertem Gegenstand erfordern kann. Alternativ können die Schwenkeinrichtung und die weitere Schwenkeinrichtung zum gleichzeitigen Verschwenken der Halterungen von zwei verschiedenen, vorzugsweise aufeinander folgenden, Bewegungsvorrichtungen angeordnet sein. So können zwei Gegenstände (oder mehr bei noch weiteren Schwenkeinrichtungen) gleichzeitig behandelt werden, was eine erhöhte Produktivität ermöglicht.

In einem Ausführungsbeispiel ist die Vorrichtung als eine Rinsvorrichtung zum Rinsen von Behältern ausgebildet.

In einem weiteren Ausführungsbeispiel ist die Vorrichtung als eine Mischvorrichtung zum Vermischen von unterschiedlichen Medien in einem Behälter ausgebildet. Das Vermischen kann durch ein- oder mehrmaliges Schwenken des als Behälter ausgeführten Gegenstands erreicht werden.

In einem weiteren Ausführungsbeispiel ist die Vorrichtung als eine Transportvorrichtung zum Transportieren von Prefoms (Kunststoffrohlingen) durch einen Blasmaschinenofen ausgebildet. Die Preforms können beispielsweise aus einer Preformsortierung übernommen und z. B. mittels einer Schwenkeinrichtung über Kopf geschwenkt werden. Im Anschluss können die Preforms über Kopf aufgeheizt und kopfüber zu Behältern (z. B. Flaschen) geblasen werden. Danach kann unmittelbar ein Rinsen des Behälters erfolgen, bevor der Behälter dann im Anschluss wieder in den Normalzustand gewendet bzw. geschwenkt wird, z. B. mittels einer Schwenkeinrichtung.

Zweckmäßig trägt der Grundkörper eines oder mehrere Führungselemente, z. B. Führungszapfen, Gleitschuhe, drehbare Rollen usw., mit denen der Grundkörper entlang der Führungsbahn führbar ist.

Wie hierin verwendet, kann unter dem Begriff "Schwenken" vorzugsweise auch ein Drehen verstanden werden, z. B. wenn der Gegenstand beispielsweise genau in seiner Mitte mittels der Haltevorrichtung gehalten ist.

Vorzugsweise kann die Schwenkachse senkrecht zur Transportrichtung der mindestens einen Bewegungsvorrichtung und horizontal ausgerichtet sein. Es ist auch möglich, dass die Schwenkachse beispielsweise parallel zur Transportrichtung der mindestens einen Bewegungsvorrichtung ausgerichtet ist, so dass beispielsweise. bei der Schwenkbewegung weniger Platz nach vorn und hinten benötigt wird. Es ist so auch möglich, dass die Bewegungsvorrichtungen viel dichter zusammenfahren können und somit eine kleine Teilung realisierbar ist. Dies kann einen Durchsatz in der Vorrichtung zum Transportiren erhöhen.

Vorzugsweise können sich die Gegenstände beim Schwenken relativ zum Grundkörper zumindest zeitweise in oder gegen eine Transportrichtung der mindestens einen Bewegungsvorrichtung bewegen.

Es ist möglich, dass bei der parallel zur Transportrichtung ausgerichteten Schwenkachse ein Gegenstand vor dem Verschwenken in Transportrichtung gesehen rechts von dem Grundkörper angeordnet ist und nach dem Verschwenken links. Dies kann beispielsweise der Fall sein, wenn die Schwenkachse in der Nähe des Grundkörpers angeordnet ist.

Es ist auch möglich, dass bei der parallel zur Transportrichtung ausgerichteten Schwenkachse die Schwenkachse weiter weg vom Grundkörper und insbesondere nah an der Halterung angeordnet ist, wobei die Halterung einen gewissen Abstand vom Grundkörper aufweist, so dass die Gegenstände vor und nach dem Schwenken auf derselben Seite des Grundkörpers angeordnet sind. In diesem Fall kann es vorteilhaft sein, wenn der weiter von der Schwenkachse entfernte Teil des Gegenstands am Anfang einer Schwenkbewegung weg vom Grundkörper geschwenkt wird.

Es wäre auch denkbar, die Schwenkachse durch eine Mitte der Halterung anzuordnen, um beispielsweise den Abstand zwischen dem Grundkörper und der Halterung klein zu halten.

Die Erfindung betrifft auch eine Behälterbehandlungsanlage gemäß Anspruch 12 (z. B. zum Herstellen, Reinigen Prüfen, Abfüllen, Verschließen, Etikettieren, Bedrucken und/oder Verpacken von Behältern für flüssige Medien, vorzugsweise Getränke oder flüssige Nahrungsmittel). Die Behälterbehandlungsanlage weist mehrere Behälterbehandlungsvorrichtungen und eine Vorrichtung zum Transportieren von Gegenständen wie hierin offenbart auf. Vorzugsweise kann die Schwenkeinrichtung in eine der mehreren Behälterbehandlungsvorrichtungen integriert sein. Alternativ kann beispielsweise die Schwenkeinrichtung bezüglich eines Behälterstroms zwischen zwei aufeinanderfolgenden Behälterbehandlungsvorrichtungen angeordnet sein, wobei vorzugsweise eine weitere Schwenkeinrichtung stromabwärts von den zwei aufeinanderfolgenden Behälterbehandlungsvorrichtungen angeordnet ist. Die Behälterbehandlungsanlage ermöglicht die Erzielung der gleichen Vorteile, wie hierin bereits für die Vorrichtung zum Transportieren von Gegenständen offenbart ist.

Die Erfindung betrifft auch ein Verfahren gemäß Anspruch 13 zum Transportieren von Gegenständen, vorzugsweise von Behältern für eine Behälterbehandlungsanlage, mittels mindestens einer Bewegungsvorrichtung. Es ist möglich, dass das Verfahren die Vorrichtung zum Transportieren von Gegenständen wie hierin offenbart verwendet. Das Verfahren weist ein individuelles Antreiben (z. B. mittels eines Langstator-Linearmotor oder Kurzstator-Linearmotors) und Führen eines Grundkörpers der mindestens einen Bewegungsvorrichtung entlang einer Führungsbahn auf. Das Verfahren weist ein Halten eines Gegenstands mittels einer Halterung der mindestens einen Bewegungsvorrichtung auf. Zweckmäßig kann die Halterung schwenkbar mit dem Grundkörper verbunden sein. Das Verfahren weist ferner ein Schwenken der Halterung zusammen mit dem gehaltenen Gegenstand um eine Schwenkachse, die angewinkelt zu einer Hochachse der mindestens einen Bewegungsvorrichtung orientiert ist, relativ zu dem Grundkörper mittels einer separat zu der mindestens einen Bewegungsvorrichtung angeordneten Schwenkeinrichtung auf. Das Verfahren kann die gleichen Vorteile wie die hierin offenbarte Vorrichtung aufweisen.

In einer Ausführungsform ist der Gegenstand ein Behälter (z. B. Getränkebehälter), der eine Öffnung (z. B. Ausgussöffnung) aufweist.

In einer weiteren Ausführungsform weist das Verfahren ferner ein Ausspülen oder Reinigen des Behälters mit einer Flüssigkeit in einer Orientierung des Behälters, bei der die Öffnung im Wesentlichen nach unten gerichtet ist (z. B. Längsachse des Behälters in einem Winkel von 120° bis 180° relativ zur Vertikalen), auf, wobei das Schwenken den Behälter in die Orientierung schwenkt und/oder aus der Orientierung in eine weitere Orientierung schwenkt, in der die Öffnung im Wesentlichen nach oben gerichtet ist (z. B. Längsachse des Behälters in einem Winkel von 120° bis 180° relativ zur Vertikalen). Es ist möglich, dass nach dem Reinigen oder Ausspülen das Verfahren ein Befüllen des Behälters aufweist.

In einer weiteren Ausführungsform weist das Verfahren ein Vermischen von unterschiedlichen Medien in dem Behälter mittels des Schwenkens auf. Vorzugsweise kann das Vermischen bzw. Schwenken nach einem Befüllen des Behälters mit unterschiedlichen Medien und/oder nach einem Verschließen des Behälters erfolgen.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Querschnittansicht durch eine Vorrichtung zum Transportieren von Behältern gemäß einem Ausführungsbeispiel der vorliegenden Offenbarung, mit einem über Kopf verschwenkten Behälter;
- Figur 2: eine schematische Querschnittansicht durch die beispielhafte Vorrichtung von Figur 1;
- Figur 3: eine schematische Querschnittansicht durch eine Vorrichtung zum Transportieren von Behältern gemäß einem weiteren Ausführungsbeispiel der vorliegenden Offenbarung;
- Figur 4: eine perspektivische Vorderansicht einer Bewegungsvorrichtung gemäß einem Ausführungsbeispiel der vorliegenden Offenbarung mit eingeschwenkter Halterung;
- Figur 5: eine perspektivische Rückansicht der beispielhaften Bewegungsvorrichtung von Figur 4 mit eingeschwenkter Halterung;
- Figur 6: eine perspektivische Vorderansicht der beispielhaften Bewegungsvorrichtung von Figur 5 mit ausgeschwenkter Halterung;
- Figur 7: eine perspektivische Rückansicht der beispielhaften Bewegungsvorrichtung von Figur 4 mit ausgeschwenkter Halterung;
- Figur 8: eine perspektivische Ansicht einer Vorrichtung zum Transportieren von Behältern gemäß einem Ausführungsbeispiel der vorliegenden Offenbarung;
- Figur 9: eine perspektivische Vorderansicht einer Vorrichtung zum Transportieren von Behältern gemäß einem Ausführungsbeispiel der vorliegenden Offenbarung; und
- Figur 10: eine perspektivische Rückansicht der beispielhaften Vorrichtung von Figur 9.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

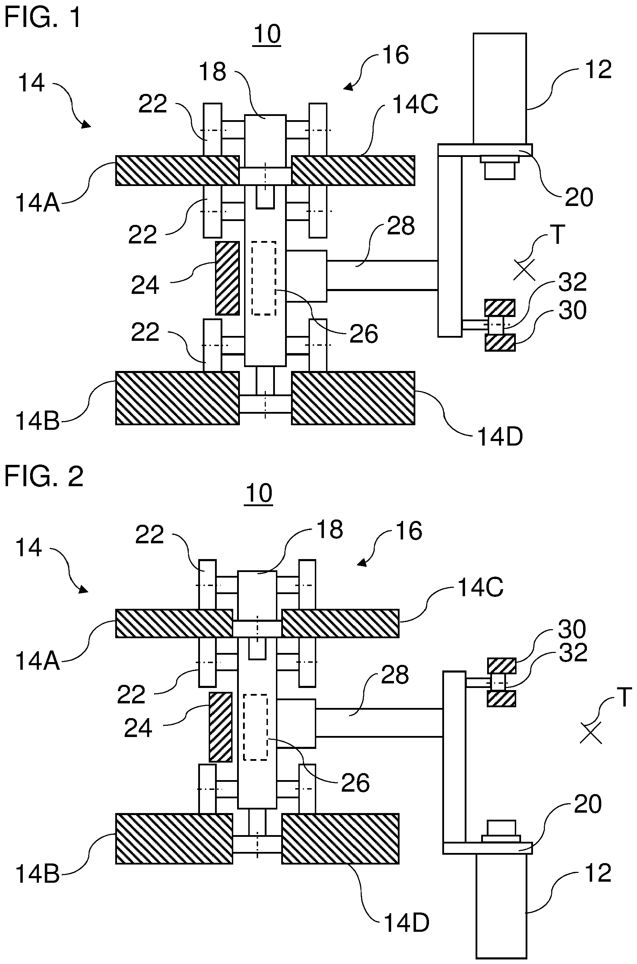

Die Figuren 1 und 2 zeigen rein schematisch eine Vorrichtung 10 zum Transportieren von Gegenständen. Die Gegenstände können mittels der Vorrichtung 10 in einer Transportrichtung T (siehe Pfeil in den Figuren) transportiert werden. In der dargestellten Ausführungsform transportiert die Vorrichtung 10 einen Behälter 12. Es ist auch möglich, dass die Vorrichtung 10 zum Transportieren von anderen Gegenständen ausgeführt ist.

Die Vorrichtung 10 weist eine Führungsbahn 14 und eine oder mehrere Bewegungsvorrichtungen 16 auf. Aus Gründen der Übersicht ist in den Figuren 1 und 2 lediglich eine Bewegungsvorrichtung 16 dargestellt. Die Bewegungsvorrichtung 16 wird entlang der Führungsbahn 14 geführt.

Eine Längserstreckungsrichtung der Führungsbahn 14 gibt die Transportrichtung T vor. Die Führungsbahn 14 kann mehrere sich parallel erstreckende Führungsbahnsegmente aufweisen, z. B. vier Führungsbahnsegmente 14A - 14D, wie dargestellt ist. Es ist auch möglich, dass mehr oder weniger Führungsbahnsegmente umfasst sind, z. B. lediglich zwei. Die Führungsbahnsegmente 14A - 14D erstrecken sich beidseitig, d. h. auf beiden Querseiten, der Bewegungsvorrichtung 16. Es ist allerdings auch möglich, dass sich lediglich auf einer (Quer-) Seite der Bewegungsvorrichtung 16 eine oder mehrere Führungsbahnsegmente erstrecken. Die Führungsbahnsegmente 14A - 14D können beispielsweise als Schienen, Nuten, Rollbahnen o. dgl. ausgeführt sein.

Zweckmäßig kann die Führungsbahn 14 eine geschlossene, z. B. ringförmige, Führungsbahn sein. Die Bewegungsvorrichtung 16 kann entlang der geschlossenen Führungsbahn 14 zirkulieren bzw. umlaufen und dabei beispielsweise verschiedene Behandlungsvorrichtungen passieren.

Die Bewegungsvorrichtung 16 weist einen Grundkörper 18 und eine Halterung 20 auf.

Der Grundkörper 18 ist mittels mehrerer Führungselemente 22 an den Führungsbahnsegmenten 14A - 14D der Führungsbahn 14 geführt und abgestützt. Im dargestellten Ausführungsbeispiel weist die Bewegungsvorrichtung 16 insgesamt acht Führungselemente 22 auf, von denen in den Figuren aus Gründen der Übersichtlichkeit jeweils nur einige mit einem Bezugszeichen versehen sind. Es ist möglich, dass die Bewegungsvorrichtung(en) 16 mehr oder weniger Führungselemente und/oder die Führungselemente eine andere als die dargestellte Anordnung aufweisen.

Die Führungselemente 22 sind als drehbare Rollen ausgeführt, die auf denen als Rollbahn ausgeführten Führungsbahnsegmenten 14A - 14D abrollbar sind. Es ist auch möglich, dass die die Führungselemente anders ausgeführt sind, z. B. als Gleitschuhe, Führungszapfen usw.

Die Bewegungsvorrichtung 16 wird mittels eines Langstators 24 angetrieben. Der Langstator 24 erstreckt sich parallel zu der Führungsbahn 14 in der Transportrichtung T. Der Langstator 24 kann entlang der Transportrichtung T aus mehreren miteinander verbundenen Langstatorsegmenten gebildet sein. Der Grundkörper 18 weist mindestens einen Magnet 26 auf. Der mindestens eine Magnet 26 kann als Elektromagnet oder Permanentmagnet ausgeführt sein. Die Langstatorsegmente des Langstators 24 können in magnetische Wechselwirkung mit dem mindestens einen Magnet 26 der Bewegungsvorrichtung 16 treten. Der Langstator 24 und die Magnete 26 bilden somit einen sogenannten Langstator-Linearmotor. Durch die magnetische Wechselwirkung kann die Bewegungsvorrichtung 16 entlang der Transportrichtung T bewegt werden. Im Einzelnen kann jede Bewegungsvorrichtung 16 einzeln und individuell von dem Langstator 24 entlang der Führungsbahn 14 in der Transportrichtung T (oder entgegengesetzt dazu) bewegt werden.

Auch wenn der Antrieb mittels Langstator-Linearmotor besonders bevorzugt ist, wurde erkannt, dass die hierin offenbarten Techniken auch bei anderen Antriebskonzepten eingesetzt werden können. Es ist somit beispielsweise auch möglich, die Bewegungsvorrichtungen 16 mittels einer anderen Antriebstechnik individuell anzutreiben bzw. fortzubewegen. Z. B. kann jede der Bewegungsvorrichtungen 16 eine eigene zweckmäßig elektrische Antriebseinheit aufweisen, mit der beispielsweise Räder oder Rollen der Bewegungsvorrichtungen 16 entlang der Führungsbahn 14 antreibbar sind.

Die Halterung 20 ist zum Halten des Behälters 12 ausgeführt. Die Halterung 20 kann beispielsweise als zweckmäßig vorgespannte Klammer, als Dorn oder als betätigbarer Greifer ausgeführt sein. Die Halterung 20 hält und trägt den Behälter 12 an einem Behälterhals des Behälters 12, vorzugsweise unterhalb eines Halsrings (Neckrings) des Behälters 12. Der Behälter 12 ist lösbar durch die Halterung 20 gehalten. Es ist auch möglich, dass die Halterung 20 den Behälter 12 an einer anderen Stelle hält, z. B. am Behälterrumpf. In anderen Ausführungsformen kann die Halterung 20 auch anders ausgeführt sein, um beispielsweise andere Gegenstände mit anderen Formen zu halten.

Die Vorrichtung 10 ist in der Lage, die Halterung 20 und damit den Behälter 12 zu verschwenken, insbesondere über Kopf. Dazu weist die Vorrichtung 10 zweckmäßig eine Schwenkachse 28 und eine Schwenkeinrichtung 30 auf.

Die Halterung 20 ist über die Schwenkachse 28 schwenkbar (drehbar) mit dem Grundkörper 18 verbunden. Die Schwenkachse 28 kann in einem Drehlager am Grundkörper 18 drehbar gelagert sein. Die Schwenkachse 28 kann zweckmäßig in jeglicher Orientierung ausgerichtet sein, die es ermöglicht, die Halterung 20 und damit den Behälter 12 über Kopf zu schwenken. Zweckmäßig kann die Schwenkachse 28 somit jegliche Ausrichtung haben, die angewinkelt zu einer Hochachse der Bewegungsvorrichtung 16 ist. Beispielsweise kann die Schwenkachse 28 horizontal und quer zur Transportrichtung T orientiert sein, wie in den Figuren dargestellt ist. Es ist allerdings auch möglich, dass die Schwenkachse 28 parallel zur Transportrichtung T verläuft. Es ist auch möglich, dass die Schwenkachse 28 nicht horizontal, sondern angewinkelt hierzu verläuft.

Die Schwenkeinrichtung 30 ist extern von der Bewegungsvorrichtung 16 an einem Streckenabschnitt der Führungsbahn 14 ortsfest angeordnet. Die Schwenkeinrichtung 30 kann ein Verschwenken der Halterung 20 um die Schwenkachse 28 bewirken. Die Schwenkeinrichtung 30 ist mit der Bewegungsvorrichtung 16 verbindbar bzw. koppelbar. Im Einzelnen kann ein Verbindungselement 32 der Bewegungsvorrichtung 16 mit der Schwenkeinrichtung 30 verbunden werden, wenn die Bewegungsvorrichtung 16 die Schwenkeinrichtung 30 passiert oder an der Schwenkeinrichtung 30 anhält. Das Verbindungselement 32 kann an der Halterung 20 und/oder an der Schwenkachse 28 befestigt sein.

In den Figuren 1 bis 3 ist die Schwenkeinrichtung 30 als eine Kulissenführung ausgebildet. Die Kulissenführung führt das Verbindungselement 32, das beispielsweise als eine drehbare Rolle ausgeführt ist. Die Kulissenführung ist so geformt, dass sie eine relative Höhenveränderung des Verbindungselements 32 zum Grundkörper 18 bewirkt, wenn sich die Bewegungsvorrichtung 16 entlang der Führungsbahn 14 und der Schwenkeinrichtung 30 fortbewegt. Die relative Höhenveränderung wird über die Schwenkachse 28 zu einer Schwenkbewegung der Halterung 20 umgewandelt, sodass der von der Halterung 20 gehaltene Behälter 12 um die Schwenkachse 28 geschwenkt werden kann. Da das Verbindungselement 32 ebenfalls über die Schwenkachse 28 schwenkbar am Grundkörper 18 getragen ist, vollführt das Verbindungselement 32 wie die Halterung 20 eine Schwenkbewegung um die Schwenkachse 28 während der relativen Höhenveränderung.

Die Figuren 1 und 2 zeigen, wie die Halterung 20 und der Behälter 12 durch die Schwenkeinrichtung 30 während des Fortbewegens der Bewegungsvorrichtung 16 über Kopf geschwenkt werden.

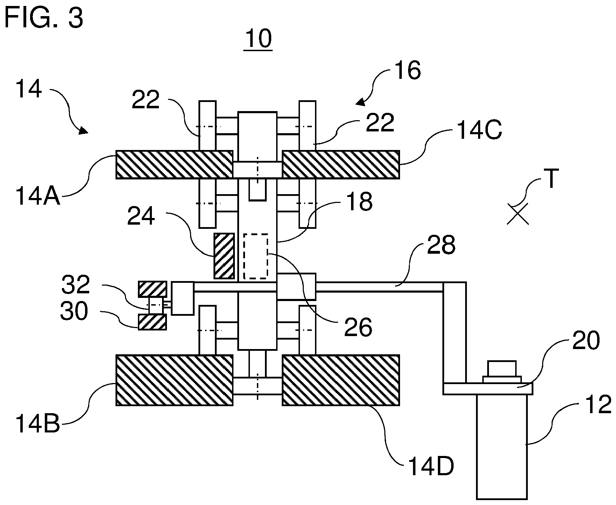

In dem gezeigten Ausführungsbeispiel nach den Figuren 1 und 2 ist es bevorzugt so, dass die Halterung 20 immer in oder entgegen der Transporteinrichtung relativ zum Führungselement 22 zumindest leicht versetzt angeordnet ist, um einen Hebel für die Kraft, die die Kulissenführung auf das Verbindungselement 32 ausübt - relativ zur Schwenkachse 28 gesehen - bereitzustellen. Will man eine senkrechte Position des Gegenstands 12 erwirken, so kann die Halterung 20 relativ zum nicht positionieren Hebel zwischen Halterung 20 und Verbindungselement, um eine Parallele zur Schwenkachse 28 gedreht am Hebel angeordnet sein. Alternativ (nicht dargestellt) wäre es zur Initiierung der Schwenk- bzw. Drehbewegung möglich, einen stationären Reibbelag anzuordnen, welcher den Hebel, die Halterung 20 oder das Verbindungselement 32 beim Vorbeikommen berührt und dadurch die Schwenk- bzw. Drehbewegung bewirkt. Selbiges gilt für Figur 3.

Es ist möglich, dass das Verbindungselement 32 anders ausgeführt ist, z. B. berührungslos in Form eines Magneten oder berührend in Form von einem Gleitschuh, einem Führungszapfen oder einer Führungsplatte.

Gemäß der zweiten Option der Erfindung weist die Schwenkeinrichtung 30 einen Drehantrieb auf. Der Drehantrieb kann mit dem Verbindungselement 32 zum Drehen des Verbindungselements 32 und damit der Halterung 20 und des Behälters 12 verbunden werden. Zweckmäßig steht die Bewegungsvorrichtung 16 hierbei still, und eine Drehachse des Drehantriebs fluchtet mit der Schwenkachse 28. Der Drehantrieb kann beispielsweise elektrisch, pneumatisch oder hydraulisch angetrieben sein.

Die Vorrichtung 10 ermöglicht somit, dass der Behälter 12 verschwenkt werden kann, ohne dass er hierfür von der Bewegungsvorrichtung 16 übergeben oder entnommen werden muss. Das Verschwenken über Kopf kann insbesondere in Behälterbehandlungsanlagen zweckmäßig eingesetzt werden, da einige Behälterbehandlungsvorrichtungen eine Überkopfbehandlung des Behälters 12 voraussetzen können.

Beispielsweise kann eine Blasvorrichtung zum Herstellen von Behältern die Behälter 12 über Kopf aus einem Kunststoffrohling (Preform) blasen. Eine Rinsvorrichtung kann die Behälter 12 über Kopf rinsen (spülen), um zu gewährleisten, dass die in die Behälter 12 eingesprühte Rinsflüssigkeit (z. B. Wasser, Sterilwasser usw.) die Behälter 12 wieder von selbst verlässt. Andere Behandlungsvorrichtungen der Behälterbehandlungsanlage, wie beispielsweise ein Behälterfüller oder ein Behälterverschließer, können wiederum eine aufrechte Orientierung der Behälter 12 verlangen. Die Vorrichtung 10 kann somit eingesetzt werden, um die unterschiedlichen gewünschten Orientierungen für die Behälterbehandlungsvorrichtungen zu gewährleisten. So kann beispielsweise zunächst der Behälter 12 über Kopf hergestellt und gerinst werden und danach aufrecht gefüllt und verschlossen werden. Es ist auch möglich, dass ein Behälter mit einer Hülse bzw. einem Sleeve versehen werden soll. Das Anbringen bzw. Überstülpen der Hülse auf den Behälter 12 kann erfolgen, wenn der Behälter 12 in einer Über-Kopf-Stellung ist. Die Hülse kann somit beispielsweise auch einen Boden des Behälters 12 mitabdecken. Neben der Anordnung zwischen Behälterbehandlungsvorrichtungen ist es auch denkbar, dass die Vorrichtung 10 selbst in eine Behälterbehandlungsvorrichtung integriert ist. Z. B. kann die Vorrichtung 10 als eine Mischvorrichtung dienen, in der mehrere in den Behälter 12 gefüllte Medien (z. B. Wasser, Sirup, Geschmacksstoffe und/oder Zerealien) miteinander durch Verschwenken des Behälters 12 gemischt werden, zweckmäßig nachdem der Behälter 12 bereits verschlossen wurde. Die Vorrichtung 10 kann beispielsweise auch in einer Behälterblasvorrichtung oder in einer Rinsvorrichtung integriert sein.

In der Ausführungsform der Figuren 1 und 2 sind die Halterung 20, die Schwenkeinrichtung 30 und das Verbindungselement 32 alle auf der gleichen (Quer-)Seite der Bewegungsvorrichtung 16 angeordnet. Es ist allerdings beispielsweise auch möglich, dass die Schwenkeinrichtung 30 und das Verbindungselement 32 einerseits und die Halterung 20 mit dem Behälter 12 andererseits auf unterschiedlichen Seiten, insbesondere entgegengesetzten Querseiten, der Bewegungsvorrichtung 16 angeordnet sind, wie in Figur 3 beispielhaft gezeigt ist. Beispielsweise kann sich die Schwenkachse 28 durch den Grundkörper 18 hindurch erstrecken. Das Verbindungselement 32 und die Halterung 20 können an entgegengesetzten Enden der Schwenkachse 28 angebracht sein.

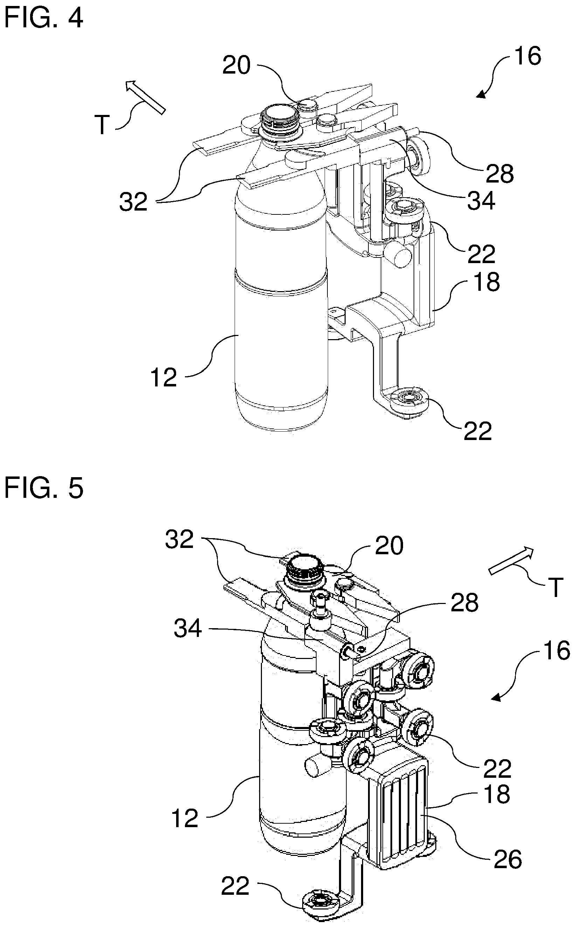

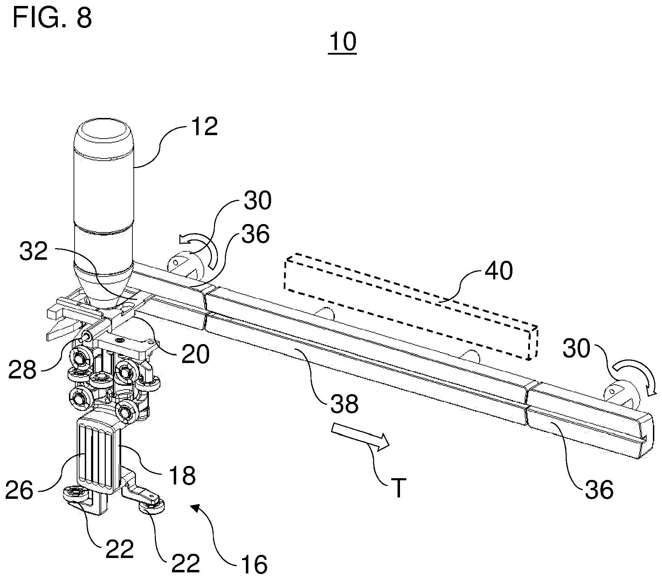

Die Figuren 4 bis 7 zeigen eine alternative Ausführungsform für die Bewegungsvorrichtung 16, die insbesondere mit den Vorrichtungen der Figuren 8 bis 10 verwendbar ist. Aus Übersichtsgründen sind in den Figuren 4 bis 10 keine Führungsbahnen und kein Langstator dargestellt.

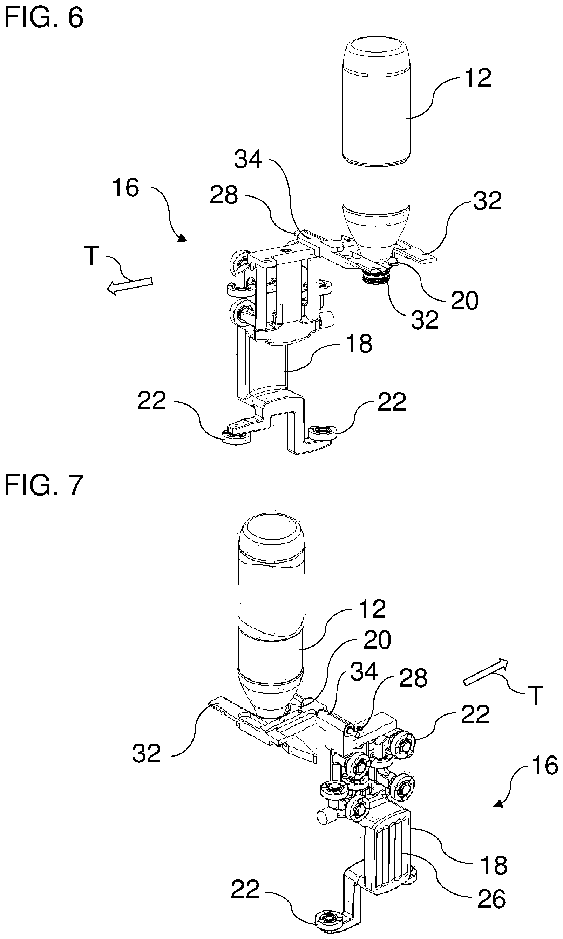

Die Figuren 4 bis 7 zeigen die Bewegungsvorrichtung 16, bei der die Schwenkachse 28 auf einer Oberseite des Grundköpers 18 angeordnet ist. Die Halterung 20 kann zwischen einer Grundstellung bzw. Einschwenkstellung und einer Ausschwenkstellung geschwenkt werden. Ein Schwenkwinkel zwischen der Grundstellung und der Ausschwenkstellung kann zweckmäßig 180° betragen. Es ist grundsätzlich aber jeder beliebige Schwenkwinkel von 1° bis 360° denkbar. Die Figuren 4 und 5 zeigen die Halterung 20 in der Grundstellung. Die Figuren 6 und 7 zeigen die Halterung 20 in der Ausschwenkstellung.

Das Verbindungselement 32 der Bewegungsvorrichtung 16 der Figuren 4 bis 7 weist an seinem vorderen Ende vorzugsweise beidseitig abgeflachte Bereiche bzw. zwei abgeflachte Führungsplatten auf. Die Halterung 20 ist vorzugsweise direkt auf dem Verbindungselement 32 befestigt. Die Halterung 20 ist als eine zweckmäßig vorgespannte Klammer ausgeführt, die den Behälter 12 unterhalb des Halsrings lösbar hält bzw. trägt.

Allgemein kann die Bewegungsvorrichtung 16 eine Arretiervorrichtung 34 (nur schematisch in den Figuren 4 bis 7 angedeutet) aufweisen. Die Arretiervorrichtung 34 kann die Halterung 20 und/oder die Schwenkachse 28 in einer oder mehreren gewünschten Stellungen arretieren. Z. B. kann die Arretiervorrichtung 34 die Halterung 20 der Bewegungsvorrichtung 16 der Figuren 4 bis 7 in der Grundstellung und/oder der Ausschwenkstellung arretieren.

Alternativ ist beispielsweise auch eine verriegelbare Arretierung denkbar. Vor dem Schwenkvorgang könnte diese Arretierung dann gelöst werden.

Die Arretiervorrichtung 34 kann beispielsweise durch einen oder mehrere nicht näher dargestellte Magnete, eine nicht näher dargestellte Rastvorrichtung oder einen nicht näher dargestellten elastisch vorgespannten Sperrkörper o. dgl. ausgeführt sein. Die Arretiervorrichtung 34 kann verhindern, dass die Halterung 20 ungewünscht aus der jeweils arretierten Stellung bewegt wird, z. B. in Folge einer Beschleunigung oder Verzögerung der Bewegungsvorrichtung 16. Beim Verschwenken muss die jeweilige Schwenkeinrichtung 30 (nicht dargestellt in den Figuren 4 bis 7) zunächst die durch die Arretiervorrichtung 34 bewirkte Arretierkraft überwinden, um die Halterung 20 aus der jeweils arretierten Stellung zu verschwenken.

Die Figur 8 zeigt eine Ausführungsform der Vorrichtung 10.

Die Figur 8 zeigt, dass die Schwenkeinrichtung 30 einen Drehantrieb aufweist. Das Verbindungselement 32 der Bewegungsvorrichtung 16 kann mit einem Verbindungselement 36 der Schwenkeinrichtung 30 verbunden werden. Das Verbindungselement 36 kann beispielsweise als eine Schiene, eine Nut, eine Kulissenführung, eine Aufnahme usw. oder als ein Stift o. dgl. ausgeführt sein. Das Verbindungselement 36 kann von dem Drehantrieb gedreht werden. Die Bewegungsvorrichtung 16 steht dabei still. Durch die Drehung des Drehantriebs können die Verbindungselemente 32, 36 und die Halterung 20 in die Ausschwenkstellung geschwenkt werden, wie auf der linken Seite in Figur 8 dargestellt ist. Zweckmäßig fluchtet eine Drehachse des Drehantriebs dabei mit der Schwenkachse 28.

Nach dem Schwenken in die Ausschwenkstellung kann die Bewegungsvorrichtung 16 weiter entlang der Transportrichtung T bewegt werden. Die Halterung 20 wird dabei durch beispielsweise ein stationäres Führungselement 38, z. B. eine Nut oder eine Schiene, in der Ausschwenkstellung gehalten. Alternativ oder zusätzlich könnte die Halterung 20 während der Bewegung auch durch die bereits genannte Arretiervorrichtung 34 (siehe Figuren 4 bis 7) in der Ausschwenkstellung gehalten werden.

Nach dem Schwenken in die Ausschwenkstellung kann die Bewegungsvorrichtung 16 durch eine Behandlungsvorrichtung 40 (nur schematisch in Figur 8 angedeutet) während der Fahrt oder im Stillstand behandelt werden. Beispielsweise kann die Behandlungsvorrichtung 40 eine Rinsvorrichtung mit Rinsventilen, die ein Rinsfluid von unten in den Behälter 12 einsprühen, sein.

Nach der Behandlung in der Behandlungsvorrichtung 40 kann die Halterung 20 mittels einer weiteren Schwenkeinrichtung 30 wieder in die Grundstellung zurückgeschwenkt werden, wenn gewünscht. Die Schwenkeinrichtung 30 (linke Seite in Figur 8) kann somit dazu genutzt werden, die Halterung 20 in die Ausschwenkstellung zu schwenken, während die weitere Schwenkeinrichtung 30 (rechte Seite in Figur 8) dazu genutzt werden kann, die Halterung 20 der gleichen Bewegungsvorrichtung 16 wieder zurück in die Grundstellung zu schwenken.

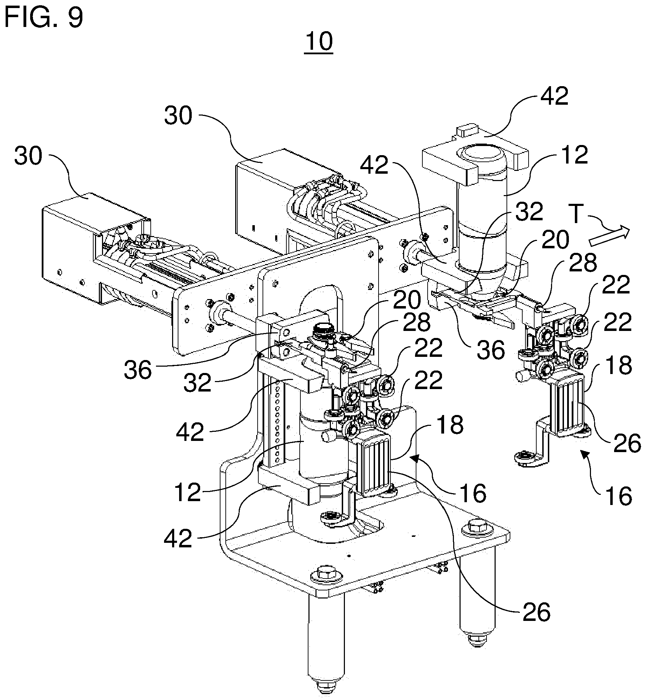

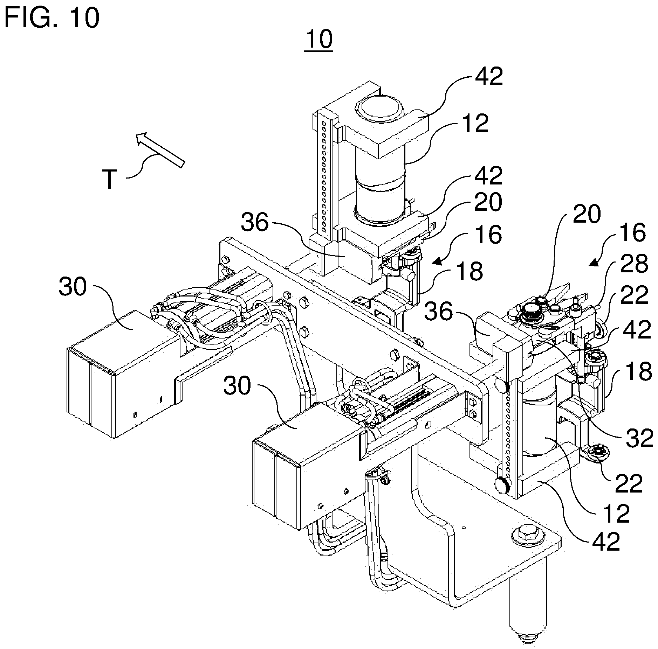

Die Figuren 9 und 10 zeigen eine Mischvorrichtung, in der die Vorrichtung 10 integriert ist. Die Mischvorrichtung dient zum Mischen von Medien in den Behältern 12. Im dargestellten Ausführungsbeispiel weist die Mischvorrichtung zwei Mischstationen mit jeweils einer Schwenkeinrichtung 30 zum gleichzeitigen Verschwenken von zwei Behältern 12 auf. Damit können immer gleichzeitig zwei Behälter 12 behandelt werden, wodurch sich ein Durchsatz erhöhen lässt.

Die Medien in den Behältern 12 werden durch mehrfaches Umdrehen bzw. Auf-den-Kopf-Stellen der Behälter 12 vermischt. Die Vorrichtung 10 dient hierbei zum Verschwenken der Behälter 12. Ein Mischvorgang kann auch dadurch erfolgen, dass der Behälter 12 durch die Mischvorrichtung bzw. Schwenkeinrichtung 30 in Schwenkrichtung hin und her bewegt wird. Dies kann sowohl aufrecht stehend oder über Kopf erfolgen. Damit kann bei Bedarf ein besserer Durchmischungsgrad der Komponenten im Behälter 12 erzielt werden.

Wie in den Figuren 9 und 10 beispielhaft gezeigt, kann die Vorrichtung 10 eine Stützvorrichtung 42 für die Behälter 12 aufweisen. Die Stützvorrichtung 42 kann die Behälter 12 während des Verschwenkens stützen. Die Halterung 20 muss daher nicht die gesamte Belastung durch den gefüllten Behälter 12 tragen. Die Stützvorrichtung 42 stützt zweckmäßig einen Behälterrumpf und/oder eine Behälterbasis des Behälters 12. Eine Form der Stützvorrichtung 42 kann an eine Form des Behälters 12 angepasst sein. Die Stützvorrichtung 42 kann den Behälter 12 an einer oder mehreren Stellen bzw. Bereichen des Behälters 12 stützen. Z. B. kann die Stützvorrichtung 42 den Behälter 12 an einem oberen Bereich des Behälterrumpfes und einem unteren Bereich des Behälterrumpfes stützen, wie dargestellt ist. Wie ebenfalls dargestellt ist, können die einzelnen Segmente der Stützvorrichtung 42 höhenverstellbar angeordnet und/oder (z. B. schnell-)wechselbar befestigt sein, sodass beispielsweise schnell auf unterschiedliche Behälterformate umgestellt werden kann.

Die Stützvorrichtung 42 kann Teil der Schwenkeinrichtung 30 sein und zusammen mit der Halterung 20 verschwenkt werden, wie dargestellt ist. Es ist auch möglich, dass die Stützvorrichtung 42 Teil der Bewegungsvorrichtung 16 ist. Beispielsweise kann die Stützvorrichtung 42 mit der Halterung 20 verbunden sein und von der Schwenkachse 28 verschwenkt werden.

Im dargestellten Ausführungsbeispiel kann die Schwenkeinrichtung 30 das Verbindungselement 36 und/oder die Stützvorrichtung 42 auch translatorisch bewegen, z. B. mittels eines Linearmotors. Die translatorische Bewegung kann zweckmäßig quer zu der Transportrichtung T erfolgen. Damit kann das Verbindungselement 36 selektiv in Kontakt mit oder außer Kontakt von dem Verbindungselement 32 gebracht werden, um ein Verschwenken des Behälters 12 zu ermöglichen. Ebenso kann die Stützvorrichtung 42 selektiv in Kontakt mit oder außer Kontakt von dem Behälter 12 gebracht werden, um den Behälter 12 nur während des Verschwenkens zu stützen. Im eingezogenen Zustand blockiert das Verbindungselement 36 und/oder die Stützvorrichtung 42 eine Weiterfahrt der Bewegungsvorrichtung 16 nicht. Neben der hier erläuterten translatorischen Bewegung des Verbindungselements 36 und der Stützvorrichtung 42 sind auch andere Bewegungsverläufe für das Verbindungselement 36 und/oder die Stützvorrichtung 42 möglich, um selektiv in Kontakt oder außer Kontakt von dem Verbindungselement 36 bzw. dem Behälter 12 zu kommen, z. B. eine Schwenkbewegung.

### Bezugszeichenliste

- 10: Vorrichtung zum Transportieren von Gegenständen
- 12: Behälter
- 14: Führungsbahn
- 14A: Führungsbahnsegment
- 14B: Führungsbahnsegment
- 14C: Führungsbahnsegment
- 14D: Führungsbahnsegment
- 16: Bewegungsvorrichtung
- 18: Grundkörper
- 20: Halterung
- 22: Führungselement
- 24: Langstator
- 26: Magnet(e)
- 28: Schwenkachse
- 30: Schwenkeinrichtung
- 32: Verbindungselement
- 34: Arretiervorrichtung
- 36: Verbindungselement
- 38: Stationäres Führungselement
- 40: Behandlungsvorrichtung
- 42: Stützvorrichtung

- T: Transportrichtung

## Patentansprüche

1. Vorrichtung (10) zum Transportieren von Gegenständen, vorzugsweise von Behältern (12) für eine Behälterbehandlungsanlage, aufweisend:
eine Führungsbahn (14);
mindestens eine Bewegungsvorrichtung (16) mit:
- einem Grundkörper (18), der entlang der Führungsbahn (14) geführt und individuell antreibbar ist; und
- einer Halterung (20) zum Halten eines Gegenstands, vorzugsweise eines Behälters (12), wobei die Halterung (20) um eine Schwenkachse (28) schwenkbar mit dem Grundkörper (18) verbunden ist und die Schwenkachse (28) angewinkelt zu einer Hochachse der mindestens einen Bewegungsvorrichtung (16) orientiert ist; und
eine Schwenkeinrichtung (30), die separat zu der mindestens einen Bewegungsvorrichtung (16) angeordnet und zum Bewirken eines Verschwenkens der Halterung (20) um die Schwenkachse (28) ausgebildet ist.
wobei:
die mindestens eine Bewegungsvorrichtung (16) ein Verbindungselement (32) aufweist, das mit der Schwenkeinrichtung (30) verbindbar und mit der Halterung (20) verbunden ist, wobei das Verbindungselement (32) dazu ausgebildet ist, unter Einwirkung der Schwenkeinrichtung (30) eine Schwenkbewegung der Halterung (20) zu bewirken, **dadurch gekennzeichnet, dass**:
ein Verbindungselement (36) der Schwenkeinrichtung (30), das mit dem Verbindungselement (32) der mindestens einen Bewegungsvorrichtung (16) verbindbar ist, bewegbar ist, um in Kontakt und außer Kontakt mit dem Verbindungselement (32) der mindestens einen Bewegungsvorrichtung (16) zu gelangen; und/oder
die Schwenkeinrichtung (30) einen Drehantrieb aufweist, mit dem das Verbindungselement (32) der mindestens einen Bewegungsvorrichtung (16) drehbar ist.

2. Vorrichtung (10) nach Anspruch 1, wobei:
die Schwenkachse (28) so orientiert ist, dass der in der Halterung (20) gehaltene Gegenstand über Kopf verschwenkbar ist; und/oder
die Schwenkachse (28) dazu ausgebildet ist, die Halterung (20) in einem Schwenkwinkel im Bereich zwischen 1° und 360° zu verschwenken, vorzugsweise um 180°; und/oder
die Halterung (20) zwischen einer Grundstellung und einer Ausschwenkstellung, vorzugsweise Überkopf-Ausschwenkstellung, um die Schwenkachse (28) verschwenkbar ist.

3. Vorrichtung (10) nach Anspruch 1 oder Anspruch 2, wobei:
die Schwenkeinrichtung (30) ortsfest bezüglich der Führungsbahn (14) ist; und/oder
die Schwenkeinrichtung (30) dazu ausgebildet ist, die Halterung (20) während eines Stillstands der jeweiligen Bewegungsvorrichtung (16) oder während einer Bewegung der jeweiligen Bewegungsvorrichtung (16) entlang der Führungsbahn (14) zu verschwenken.

4. Vorrichtung (10) nach einem der vorherigen Ansprüche, wobei:
das Verbindungselement (32) der mindestens einen Bewegungsvorrichtung (16) um die Schwenkachse (28) der Halterung (20) verschwenkbar ist; und/oder
das Verbindungselement (32) der mindestens einen Bewegungsvorrichtung (16) als ein Führungselement, vorzugsweise eine drehbare Rolle, ein Gleitschuh, ein Führungsstift, eine Führungsplatte oder eine Führungsnut, ausgebildet ist; und/oder
das Verbindungselement (36) der Schwenkeinrichtung (30) translatorisch bewegbar ist, um in Kontakt und außer Kontakt mit dem Verbindungselement (32) der mindestens einen Bewegungsvorrichtung (16) zu gelangen.

5. Vorrichtung (10) nach einem der vorherigen Ansprüche, wobei:
die Schwenkeinrichtung (30) eine Kulissenführung aufweist, in der das Verbindungselement (32) der mindestens einen Bewegungsvorrichtung (16) führbar ist und deren Verlaufsform ein Verschwenken des Verbindungselements (32) der mindestens einen Bewegungsvorrichtung (16), vorzugsweise um die Schwenkachse (28), bewirkt; und/oder
mit dem Drehantrieb das Verbindungselement (32) der mindestens einen Bewegungsvorrichtung (16) drehbar ist, nämlich um die Schwenkachse (28) und/oder wenn eine Drehachse des Drehantriebs mit der Schwenkachse (28) ausgerichtet ist.

6. Vorrichtung (10) nach einem der vorherigen Ansprüche, wobei:
die Schwenkeinrichtung (30) und die Halterung (20) auf der gleichen Seite bezüglich des Grundkörpers (18) angeordnet sind; oder
die Schwenkeinrichtung (30) einerseits und die Halterung (20) andererseits auf unterschiedlichen, vorzugsweise entgegengesetzten, Seiten bezüglich des Grundkörpers (18) angeordnet sind.

7. Vorrichtung (10) nach einem der vorherigen Ansprüche, ferner aufweisend:
eine Stützvorrichtung (42), die zum Stützen des Gegentands ausgebildet ist, vorzugsweise während des Verschwenkens um die Schwenkachse (28).

8. Vorrichtung (10) nach Anspruch 7, wobei:
die mindestens eine Bewegungsvorrichtung (16) die Stützvorrichtung (42) oder die Schwenkeinrichtung (30) die Stützeinrichtung aufweist; und/oder
die Halterung (20) eine Behälterhalshalterung und die Stützvorrichtung (42) eine Behälterrumpfstützeinrichtung oder eine Behälterbasisstützeinrichtung ist; und/oder
die Stützvorrichtung (42) bewegbar ist, vorzugsweise translatorisch und/oder quer zur Führungsbahn (14) und/oder mittels eines Linearantriebs, um in Kontakt und außer Kontakt mit dem von der Halterung (20) gehaltenen Gegenstand zu gelangen; und/oder
die Stützvorrichtung (42) von der Schwenkeinrichtung (30) schwenkbar ist, vorzugsweise um eine Drehachse der Schwenkeinrichtung (30) und/oder die Schwenkachse (28).

9. Vorrichtung (10) nach einem der vorherigen Ansprüche, wobei:
die mindestens eine Bewegungsvorrichtung (16) eine Arretiervorrichtung (34) aufweist, die dazu ausgebildet ist, die Schwenkachse (28) und/oder die Halterung (20) in einer Ausschwenkstellung und/oder in einer Grundstellung zu arretieren, vorzugsweise mittels Magnetkraft, einer Rastvorrichtung oder eines elastisch vorgespannten Sperrkörpers; und/oder
die mindestens eine Bewegungsvorrichtung (16) mittels eines Langstator-Linearmotors oder mittels eines Kurzstator-Linearmotors individuell antreibbar ist.

10. Vorrichtung (10) nach einem der vorherigen Ansprüche, ferner aufweisend:
eine weitere Schwenkeinrichtung (30), die separat von der mindestens einen Bewegungsvorrichtung (16) angeordnet und zum Verschwenken der Halterung (20) um die Schwenkachse (28) ausgebildet ist, wobei:
die Schwenkeinrichtung (30) zum Ausschwenken der Halterung (20) eingerichtet ist und die weitere Schwenkeinrichtung (30) zum Einschwenken der ausgeschwenkten Halterung (20) eingerichtet ist, oder
die Schwenkeinrichtung (30) und die weitere Schwenkeinrichtung (30) zum gleichzeitigen Verschwenken der Halterungen (20) von zwei verschiedenen, vorzugsweise aufeinanderfolgenden, Bewegungsvorrichtungen (16) angeordnet sind.

11. Vorrichtung (10) nach einem der vorherigen Ansprüche, wobei:
die Vorrichtung (10) als eine Rinsvorrichtung zum Rinsen von Behältern (12) ausgebildet ist; oder
die Vorrichtung (10) als eine Mischvorrichtung zum Vermischen von unterschiedlichen Medien in einem Behälter (12) ausgebildet ist.

12. Behälterbehandlungsanlage, aufweisend
mehrere Behälterbehandlungsvorrichtungen (40); und
eine Vorrichtung (10) nach einem der vorherigen Ansprüche,
wobei:
die Schwenkeinrichtung (30) in eine der mehreren Behälterbehandlungsvorrichtungen (40) integriert ist; oder
die Schwenkeinrichtung (30) bezüglich eines Behälterstroms zwischen zwei aufeinanderfolgenden Behälterbehandlungsvorrichtungen (40) angeordnet ist, wobei vorzugsweise eine weitere Schwenkeinrichtung (30) stromabwärts von den zwei aufeinanderfolgenden Behälterbehandlungsvorrichtungen (40) angeordnet ist.

13. Verfahren zum Transportieren von Gegenständen, vorzugsweise von Behältern (12) für eine Behälterbehandlungsanlage, mittels mindestens einer Bewegungsvorrichtung, wobei das Verfahren die Vorrichtung nach einem der Ansprüche 1 bis 11 verwendet, wobei das Verfahren aufweist:
Individuelles Antreiben und Führen eines Grundkörpers (18) der mindestens einen Bewegungsvorrichtung (16) entlang einer Führungsbahn (14);
Halten eines Gegenstands mittels einer Halterung (20) der mindestens einen Bewegungsvorrichtung (16);
Schwenken der Halterung (20) zusammen mit dem gehaltenen Gegenstand um eine Schwenkachse (28), die angewinkelt zu einer Hochachse der mindestens einen Bewegungsvorrichtung (16) orientiert ist, relativ zu dem Grundkörper (18) mittels einer separat zu der mindestens einen Bewegungsvorrichtung (16) angeordneten Schwenkeinrichtung (30).

14. Verfahren nach Anspruch 13, wobei der Gegenstand ein Behälter (12) ist, der eine Öffnung aufweist, wobei das Verfahren ferner aufweist:
Ausspülen oder Reinigen des Behälters mit einer Flüssigkeit in einer Orientierung des Behälters, bei der die Öffnung im Wesentlichen nach unten gerichtet ist, wobei das Schwenken den Behälter in die Orientierung schwenkt und/oder aus der Orientierung in eine weitere Orientierung schwenkt, in der die Öffnung im Wesentlichen nach oben gerichtet ist; oder
Vermischen von unterschiedlichen Medien in dem Behälter (12) mittels des Schwenkens.

## Claims

1. An apparatus (10) for transporting objects, preferably containers (12) for a container processing installation, having:
a guide path (14);
at least one movement apparatus (16) having:
- a base member (18) which is guided along the guide path (14) and which can be individually driven; and
- a holder (20) for retaining an object, preferably a container (12), wherein the holder (20) is connected to the base member (18) so as to be able to be pivoted about a pivot axis (28) and the pivot axis (28) is orientated so as to be angled with respect to an upright axis of the at least one movement apparatus (16); and
a pivot device (30) which is arranged separately from the at least one movement apparatus (16) and which is constructed to bring about a pivoting of the holder (20) about the pivot axis (28),
wherein:
the at least one movement apparatus (16) has a connection element (32) which can be connected to the pivot device (30) and which is connected to the holder (20), wherein the connection element (32) is constructed to bring about a pivot movement of the holder (20) under the action of the pivot device (30);
**characterized in that**:
a connection element (36) of the pivot device (30), which can be connected to the connection element (32) of the at least one movement apparatus (16), can be moved in a in order to move into contact and out of contact with the connection element (32) of the at least one movement apparatus (16); and/or
the pivot device (30) has a rotary drive by means of which the connection element (32) of the at least one movement apparatus (16) can be rotated.

2. The apparatus (10) according to Claim 1, wherein:
the pivot axis (28) is orientated in such a manner that the object which is retained in the holder (20) can be pivoted into an inverted state; and/or
the pivot axis (28) is constructed to pivot the holder (20) at a pivot angle in the range between 1° and 360°, preferably through 180°; and/or
the holder (20) can be pivoted about the pivot axis (28) between a basic position and a pivoted-out position, preferably an inverted pivoted-out position.

3. The apparatus (10) according to Claim 1 or Claim 2, wherein:
the pivot device (30) is fixed with respect to the guide path (14); and/or
the pivot device (30) is constructed to pivot the holder (20) during a stoppage of the respective movement apparatus (16) or during a movement of the respective movement apparatus (16) along the guide path (14).

4. The apparatus (10) according to any one of the preceding claims, wherein:
the connection element (32) of the at least one movement apparatus (16) can be pivoted about the pivot axis (28) of the holder (20); and/or
the connection element (32) of the at least one movement apparatus (16) is in the form of a guiding element, preferably a rotatable roller, a sliding block, a guiding pin, a guiding plate or a guiding groove; and/or
the connection element (36) of the pivot device (30) can be moved in a translational manner in order to move into contact and out of contact with the connection element (32) of the at least one movement apparatus (16).

5. The apparatus (10) according to any one of the preceding claims, wherein:
the pivot device (30) has a slotted guiding member, in which the connection element (32) of the at least one movement apparatus (16) can be guided and whose progressive form brings about a pivoting of the connection element (32) of the at least one movement apparatus (16), preferably about the pivot axis (28); and/or
the rotary drive can rotate the connection element (32) of the at least one movement apparatus (16) , namely about the pivot axis (28) and/or when a rotation axis of the rotary drive is orientated with the pivot axis (28).

6. The apparatus (10) according to any one of the preceding claims, wherein:
the pivot device (30) and the holder (20) are arranged at the same side with respect to the base member (18); or
the pivot device (30), on the one hand, and the holder (20), on the other hand, are arranged at different, preferably opposing, sides with respect to the base member (18).

7. The apparatus (10) according to any one of the preceding claims, further having:
a support apparatus (42) which is constructed to support the object, preferably during the pivoting about the pivot axis (28).

8. The apparatus (10) according to Claim 7, wherein:
the at least one movement apparatus (16) has the support apparatus (42) or the pivot device (30) has the support device; and/or
the holder (20) is a container neck holder and the support apparatus (42) is a container body support device or a container base support device; and/or
the support apparatus (42) can be moved, preferably in a translational manner and/or transversely relative to the guide path (14) and/or by means of a linear drive, in order to move into contact and out of contact with the object retained by the holder (20); and/or
the support apparatus (42) can be pivoted by the pivot device (30), preferably about a rotation axis of the pivot device (30) and/or the pivot axis (28).

9. The apparatus (10) according to any one of the preceding claims, wherein:
the at least one movement apparatus (16) has a locking apparatus (34), which is constructed to lock the pivot axis (28) and/or the holder (20) in a pivoted-out position and/or in a basic position, preferably by means of magnetic force, a locking apparatus or a resiliently pretensioned locking member; and/or
the at least one movement apparatus (16) can be individually driven by means of a long stator linear motor or a short stator linear motor.

10. The apparatus (10) according to any one of the preceding claims, further having:
an additional pivot device (30), which is arranged separately from the at least one movement apparatus (16) and which is constructed to pivot the holder (20) about the pivot axis (28), wherein:
the pivot device (30) is configured to pivot out the holder (20) and the additional pivot device (30) is configured to pivot in the pivoted-out holder (20), or
the pivot device (30) and the additional pivot device (30) are arranged for simultaneously pivoting the holders (20) of two different, preferably sequential, movement apparatuses (16).

11. The apparatus (10) according to any one of the preceding claims, wherein:
the apparatus (10) is constructed as a rinsing apparatus for rinsing containers (12); or
the apparatus (10) is constructed as a mixing apparatus for mixing different media in a container (12).

12. A container processing installation having
a plurality of container processing apparatuses (40); and
an apparatus (10) according to any one of the preceding claims,
wherein:
the pivot device (30) is integrated in one of the plurality of container processing apparatuses (40); or
the pivot device (30) is arranged with respect to a container flow between two sequential container processing apparatuses (40), wherein another pivot device (30) is preferably arranged downstream of the two sequential container processing apparatuses (40).

13. A method for transporting objects, preferably containers (12) for a container processing installation, by means of at least one movement apparatus, the method using the apparatus according to any one of the claims 1 to 11, wherein the method comprises:
individually driving and guiding a base member (18) of the at least one movement apparatus (16) along the guide path (14);
retaining an object by means of a holder (20) of the at least one movement apparatus (16);
pivoting the holder (20) together with the object retained about a pivot axis (28) which is orientated in an angled manner with respect to an upright axis of the at least one movement apparatus (16), relative to the base member (18) by means of a pivot device (30) which is arranged separately from the at least one movement apparatus (16).

14. The method according to Claim 13, wherein the object is a container (12) which has an opening, wherein the method further involves:
flushing out or cleaning the container with a liquid in an orientation of the container in which the opening is directed substantially downwards, wherein the pivoting pivots the container into the orientation and/or out of the orientation into another orientation in which the opening is directed substantially upwards; or
mixing different media in the container (12) by means of pivoting.

## Revendications

1. Dispositif (10) permettant le transport d'objets, de préférence de récipients (12) pour une installation de traitement de récipients, présentant :
une voie de guidage (14) ;
au moins un dispositif de déplacement (16) comportant :
- un corps de base (18) qui est guidé le long de la voie de guidage (14) et peut être entraîné individuellement ; et
- un moyen de maintien (20) permettant de maintenir un objet, de préférence un récipient (12), dans lequel le moyen de maintien (20) est relié au corps de base (18) de manière à pouvoir pivoter autour d'un axe de pivotement (28) et l'axe de pivotement (28) est orienté de manière inclinée par rapport à un axe vertical de l'au moins un dispositif de déplacement (16) ; et
un appareil de pivotement (30) qui est disposé de manière à être séparé de l'au moins un dispositif de déplacement (16) et qui est conçu pour provoquer un pivotement du moyen de maintien (20) autour de l'axe de pivotement (28),
dans lequel :
l'au moins un dispositif de déplacement (16) présente un élément de liaison (32) qui peut être relié à l'appareil de pivotement (30) et qui est relié au moyen de maintien (20), dans lequel l'élément de liaison (32) est conçu pour provoquer un mouvement de pivotement du moyen de maintien (20) sous l'action de l'appareil de pivotement (30),
**caractérisé en ce que** :
un élément de liaison (36) de l'appareil de pivotement (30), lequel élément de liaison peut être relié à l'élément de liaison (32) de l'au moins un dispositif de déplacement (16), peut être déplacé pour venir en contact et être hors de contact avec l'élément de liaison (32) de l'au moins un dispositif de déplacement (16) ; et/ou
l'appareil de pivotement (30) présente un entraînement rotatif avec lequel l'élément de liaison (32) de l'au moins un dispositif de déplacement (16) peut tourner.

2. Dispositif (10) selon la revendication 1, dans lequel :
l'axe de pivotement (28) est orienté de sorte que l'objet maintenu dans le moyen de maintien (20) peut pivoter en hauteur ; et/ou
l'axe de pivotement (28) est conçu pour faire pivoter le moyen de maintien (20) selon un angle de pivotement dans la plage comprise entre 1° et 360°, de préférence de 180° ; et/ou
le moyen de maintien (20) peut pivoter autour de l'axe de pivotement (28) entre une position de base et une position de pivotement vers l'extérieur, de préférence une position de pivotement vers l'extérieur en hauteur.

3. Dispositif (10) selon la revendication 1 ou la revendication 2, dans lequel :
l'appareil de pivotement (30) est fixe par rapport à la voie de guidage (14) ; et/ou
l'appareil de pivotement (30) est conçu pour faire pivoter le moyen de maintien (20) pendant un arrêt du dispositif de déplacement (16) respectif ou pendant un déplacement du dispositif de déplacement (16) respectif le long de la voie de guidage (14).

4. Dispositif (10) selon l'une des revendications précédentes, dans lequel :
l'élément de liaison (32) de l'au moins un dispositif de déplacement (16) peut pivoter autour de l'axe de pivotement (28) du moyen de maintien (20) ; et/ou
l'élément de liaison (32) de l'au moins un dispositif de déplacement (16) est conçu comme un élément de guidage, de préférence un galet rotatif, un patin coulissant, une broche de guidage, une plaque de guidage ou une rainure de guidage ; et/ou
l'élément de liaison (36) de l'appareil de pivotement (30) peut être déplacé en translation pour venir en contact et être hors de contact avec l'élément de liaison (32) de l'au moins un dispositif de déplacement (16).

5. Dispositif (10) selon l'une des revendications précédentes, dans lequel :
l'appareil de pivotement (30) présente un guide à coulisse dans lequel l'élément de liaison (32) de l'au moins un dispositif de déplacement (16) peut être guidé et dont le tracé provoque un pivotement de l'élément de liaison (32) de l'au moins un dispositif de déplacement (16), de préférence autour de l'axe de pivotement (28) ; et/ou
l'élément de liaison (32) de l'au moins un dispositif de déplacement (16) peut tourner avec l'entraînement rotatif, à savoir autour de l'axe de pivotement (28) et/ou lorsqu'un axe de rotation de l'entraînement rotatif est aligné avec l'axe de pivotement (28).

6. Dispositif (10) selon l'une des revendications précédentes, dans lequel :
l'appareil de pivotement (30) et le moyen de maintien (20) sont disposés du même côté par rapport au corps de base (18) ; ou
l'appareil de pivotement (30) est disposé d'un côté et le moyen de maintien (20) est disposé de l'autre côté sur des côtés différents, de préférence opposés, par rapport au corps de base (18).

7. Dispositif (10) selon l'une des revendications précédentes, présentant en outre :
un dispositif de support (42) qui est conçu pour supporter l'objet, de préférence pendant le pivotement autour de l'axe de pivotement (28).

8. Dispositif (10) selon la revendication 7, dans lequel :
l'au moins un dispositif de déplacement (16) présente le dispositif de support (42) ou l'appareil de pivotement (30) présente l'appareil de support ; et/ou
le moyen de maintien (20) est un moyen de maintien de col de récipient et le dispositif de support (42) est un appareil de support de corps de récipient ou un appareil de support de base de récipient ; et/ou
le dispositif de support (42) peut être déplacé, de préférence en translation et/ou transversalement par rapport à la voie de guidage (14) et/ou au moyen d'un entraînement linéaire, afin de venir en contact et être hors de contact avec l'objet maintenu par le moyen de maintien (20) ; et/ou
le dispositif de support (42) peut être pivoté par l'appareil de pivotement (30), de préférence autour d'un axe de rotation de l'appareil de pivotement (30) et/ou de l'axe de pivotement (28).

9. Dispositif (10) selon l'une des revendications précédentes, dans lequel :
l'au moins un dispositif de déplacement (16) présente un dispositif de blocage (34) qui est conçu pour bloquer l'axe de pivotement (28) et/ou le moyen de maintien (20) dans une position de pivotement vers l'extérieur et/ou dans une position de base, de préférence au moyen d'une force magnétique, d'un dispositif de verrouillage ou d'un corps d'arrêt précontraint élastiquement ; et/ou
l'au moins un dispositif de déplacement (16) peut être entraîné individuellement au moyen d'un moteur linéaire à stator long ou au moyen d'un moteur linéaire à stator court.

10. Dispositif (10) selon l'une des revendications précédentes, présentant en outre :
un autre appareil de pivotement (30), lequel est disposé de manière à être séparé de l'au moins un dispositif de déplacement (16) et est conçu pour faire pivoter le moyen de maintien (20) autour de l'axe de pivotement (28), dans lequel :
l'appareil de pivotement (30) est réalisé pour faire pivoter le moyen de maintien (20) vers l'extérieur et l'autre appareil de pivotement (30) est réalisé pour faire pivoter vers l'intérieur le moyen de maintien (20) pivoté vers l'extérieur, ou
l'appareil de pivotement (30) et l'autre appareil de pivotement (30) sont disposés pour faire pivoter simultanément les moyens de maintien (20) de deux dispositifs de déplacement (16) différents, de préférence successifs.

11. Dispositif (10) selon l'une des revendications précédentes, dans lequel :
le dispositif (10) est conçu comme un dispositif de rinçage permettant de rincer des récipients (12) ; ou
le dispositif (10) est conçu comme un dispositif de mélange permettant de mélanger différents milieux dans un récipient (12).

12. Installation de traitement de récipients, présentant
plusieurs dispositifs de traitement de récipients (40) ; et
un dispositif (10) selon l'une des revendications précédentes,
dans lequel :
l'appareil de pivotement (30) est intégré dans un dispositif de traitement de récipients parmi les dispositifs de traitement de récipients (40) ; ou
l'appareil de pivotement (30) est disposé, par rapport à un flux de récipients, entre deux dispositifs de traitement de récipients (40) successifs, dans lequel de préférence un autre appareil de pivotement (30) est disposé en aval des deux dispositifs de traitement de récipients (40) successifs.

13. Procédé permettant le transport d'objets, de préférence de récipients (12) pour une installation de traitement de récipients, au moyen d'au moins un dispositif de déplacement, dans lequel le procédé utilise le dispositif selon l'une des revendications 1 à 11, dans lequel le procédé présente :
l'entraînement de manière individuelle et le guidage d'un corps de base (18) de l'au moins un dispositif de déplacement (16) le long d'une voie de guidage (14) ;
le maintien d'un objet au moyen d'un moyen de maintien (20) de l'au moins un dispositif de déplacement (16) ;
le pivotement du moyen de maintien (20) conjointement avec l'objet maintenu autour d'un axe de pivotement (28), lequel axe de pivotement est orienté de manière inclinée par rapport à un axe vertical de l'au moins un dispositif de déplacement (16), par rapport au corps de base (18) au moyen d'un appareil de pivotement (30) disposé de manière à être séparé de l'au moins un dispositif de déplacement (16).

14. Procédé selon la revendication 13, dans lequel l'objet est un récipient (12) qui présente une ouverture, dans lequel le procédé présente en outre :
le rinçage ou le nettoyage du récipient avec un liquide dans une orientation du récipient dans laquelle l'ouverture est orientée sensiblement vers le bas, dans lequel le pivotement fait pivoter le récipient dans l'orientation et/ou le fait pivoter de l'orientation vers une autre orientation dans laquelle l'ouverture est orientée sensiblement vers le haut ; ou
le mélange de différents milieux dans le récipient (12) au moyen du pivotement.
